# EUROPÄISCHE PATENTSCHRIFT

(11) **EP 0 868 769 B1**
(45) Veröffentlichungstag und Bekanntmachung des Hinweises auf die Patenterteilung: **01.06.2005**
(21) Anmeldenummer: 97918900.8
(22) Anmeldetag: 23.08.1997
(51) Int. Cl.: H02K 5/22

(54) **ELEKTROMOTOR MIT SEINER KONTAKTIERUNGSEINRICHTUNG**
ELECTRIC MOTOR WITH ITS CONTACTING ARRANGEMENT
MOTEUR ELECTRIQUE ET SON DISPOSITIF DE MISE EN CONTACT

(30) Priorität: 12.10.1996 DE 19642132
(43) Veröffentlichungstag der Anmeldung: 07.10.1998
(73) Patentinhaber: ROBERT BOSCH GMBH, 70442 Stuttgart (DE)
(72) Erfinder: TISCHER, Michael, D-74232 Abstatt (DE); HUBER, Martin, D-77704 Oberkirch (DE); BITZER, Harold, D-77815 Buehl (DE); BRAUN, Wilhelm, D-77815 Buehl (DE)
(86) Internationale Anmeldenummer: PCT/DE1997/001838
(87) Internationale Veröffentlichungsnummer: WO 1998/016987

(56) Entgegenhaltungen:
- DE-A- 3 426 973
- DE-A- 3 936 672
- DE-U- 8 712 863
- US-A- 1 792 044

## Beschreibung

### Stand der Technik

Die Erfindung betrifft einen Elektromotor mit einem vorzugsweise topfförmigen Motorgehäuse und einer Kontaktierungseinrichtung zur Zuleitung elektrischer Energie von außen an entsprechende Motorteile.

Elektromotoren der angesprochenen Art sind allgemein bekannt. Sie umfassen üblicherweise ein topfförmiges Motorgehäuse, das durch einen aufgesetzten Deckel abgeschlossen wird. Zuvor werden in das Innere des Gehäuses die notwendigen elektrischen Bauteile eingesetzt, wobei hierzu bei einem Gleichstrommotor ein Kommutator und diesen kontaktierende Bürsten gehören.

Die Zuführung elektrischer Energie an die Bürsten erfolgt über Kabel, die an den Bürsten beispielsweise durch Löten festgelegt sind und eine üblicherweise randoffene Ausnehmung beziehungsweise Ausklinkung im Motorgehäuse durchlaufen und so nach außen geführt sind. Diese Anschlußleitungen müssen also im Montageprozeß des Motors bei noch nicht aufgesetztem Deckel befestigt und nach außen gezogen werden. Sind diese Anschlußleitungen nicht lang genug, um sie direkt zur Energiequelle zu führen, werden sie mit weiteren Zuführungsleitungen verbunden.

Die Verbindung von Kabeln außerhalb des Motorgehäuses hat jedoch insbesondere im Hinblick auf eine Flüssigkeitsabdichtung große Nachteile gegenüber der Verbindung im Inneren des Motorgehäuses, das von sich aus hermetisch abgedichtet ist.

Werden entsprechend länger ausgebildete Anschlußleitungen verwendet, hat dies den Nachteil, daß insoweit Flexibilität verloren geht, als daß bei nicht vorhergesehenem Einsatz bzw. bei einer Änderung der Anschlüsse des Motorgehäuses geöffnet und neue Anschlussleitungen eingesetzt werden müssen, sofern man auf die zu vorgenannte außenliegenden Verbindung verzichten möchte.

Aus der US-A-1 792 044 ist ein Elektromotor mit einem Motorgehäuse und einer Kontaktierungseinrichtung zur Zuleitung elektrischer Energie von außen an entsprechende Motorteile bekannt. Hierfür werden Bolzen verwendet, die teilweise im Gehäuseinneren angeordnet und deren jeweilige Enden sind mit einer Anschlußleitung und entsprechenden Motorteilen elektrisch verbindbar.

Aufgabe der vorliegenden Erfindung ist es, einen Elektromotor zu schaffen, bei dem das anschließen der Anschlussleitungen an die Bürsten auch nach der Montage des Motors auf einfache Weise möglich ist.

### Vorteile der Erfindung

Der erfindungsgemäße Elektromotor mit den Merkmalen des Anspruchs 1 hat demgegenüber den Vorteil, dass das Anschließen der Anschlussleitungen an den Bürsten auch nach der Montage des Motors bei aufgesetztem Deckel möglich ist. Darüber hinaus liegt die Verbindung der Bürsten mit den von außen kommenden Anschlussleitungen im Inneren des Motorgehäuses, so daß die Abdichtung des Gehäuses auch für diese Verbindung genutzt wird. Somit lassen sich Kosten einsparen, ohne die Anschlußflexibilität und die Dichtigkeit des Gehäuses zu beeinträchtigen.

Dadurch, daß die Kontaktierungseinrichtung zumindest eine im Inneren des Gehäuses angeordnete Stromschiene umfaßt, die durch eine Öffnung in der Gehäusewand nach außen verschiebbar angeordnet ist, lassen sich die Anschlußleitungen auch bei geschlossenem Motorgehäuse befestigen. Dazu muß lediglich die Stromschiene zumindest teilweise nach außen gezogen und nach dem Verbinden mit der Anschlußleitung wieder nach innen gedrückt werden.

Vorzugsweise werden die Stromschienen so angeordnet, daß sie radial zum topfförmigen Motorgehäuse verlagerbar sind. Vorzugsweise sind die Stromschienen in einer im Gehäuseinneren angeordneten Halterung geführt, so daß eine Verlagerung lediglich in einer Ebene möglich ist.

Die Bestromung der Bürsten erfolgt über elektrische Leitungen, die vorzugsweise am innenliegenden Ende der Stromschiene in eine dort angebrachte Klemmeinrichtung eingesteckt bzw. geschweißt oder gelötet sind. Somit läßt sich eine einfache Verbindung bewerkstelligen.

Die Verbindung mit dem Anschlußkabel erfolgt vorzugsweise an einem Anschlußabschnitt in der Stromschiene, der senkrecht zur Verlagerungsrichtung verläuft. Die Verbindung erfolgt beispielweise durch Verschrauben, Schweißen oder Löten oder mittels eines Steckkontakts.

Vorzugsweise ist die Stromschiene mit einer Erhebung versehen, die mit einem entsprechenden Vorsprung in der Halterung zusammenwirkt, um so einen Schnappverschluß zu bilden. Die Anordnung von Erhebung und Vorsprung erfolgt dabei so, daß die Stromschiene in der eingeschobenen Position einschnappt. Damit wird eine ungewollte Verlagerung der Stromschiene verhindert.

Besonders vorteilhaft ist die Ausbildung eines Bereichs der Halterung als Gleitbett, in dem die Stromschiene liegt und das sie zumindest an drei Seiten führt.

Weitere vorteilhafte Ausgestaltungen der Erfindung ergeben sich aus den übrigen Unteransprüchen.

### Zeichnungen

Die Erfindung wird nun anhand eines Ausführungsbeispiels mit Bezug auf die Zeichnungen näher erläutert. Dabei zeigen:
- Figur 1a bis 1c: jeweils einen Teilbereich einer Schnittdarstellung eines Elektromotors in unterschiedlichen Montagephasen, und
- Figur 2: eine perspektivische Teildarstellung einer Kontaktierungseinrichtung.

### Ausführungsbeispiel

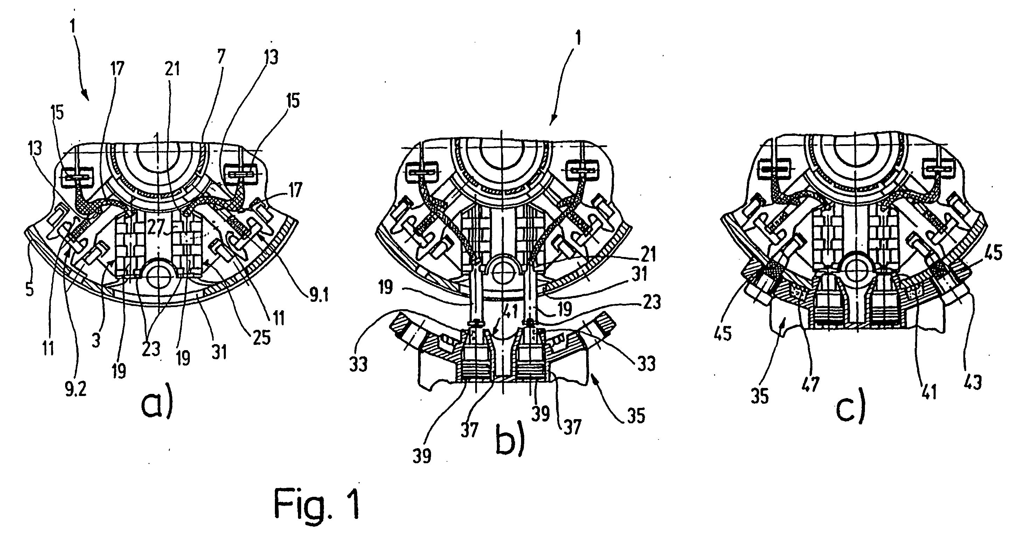

In Figur 1 ist ein Elektromotor 1 ausschnittsweise im Querschnitt dargestellt, wobei insbesondere eine Kontaktierungseinrichtung 3 zu erkennen ist. Die weiteren in einem als Kommutator-Motor ausgebildeten Elektromotor 1 vorhandenen Elemente sind lediglich schematisch dargestellt und werden im weiteren nur kurz erläutert.

Der Motor 1 weist ein topfförmiges Motorgehäuse 5 auf, das an einer parallel zur Zeichenebene liegenden Stirnseite offen ist. Diese öffnung wird üblicherweise mittels eines Lagerdeckels verschlossen.

Im Inneren des Motorgehäuses 5 liegt ein Kommutator 7, von dem nicht dargestellte Leitungen zu den Wicklungen des Motor führen und der von Bürsten 9 bestromt wird. Die beiden in einem Winkel von etwa 90° zueinander angeordneten Bürsten sind jeweils radial zu dem ringförmigen Kommutator 7 in einer Bürstenhalterung 11 verlagerbar gehalten.

Jede der Bürsten 9 ist über eine Leitung 13 elektrisch mit einer Klemme 15 verbunden, an der eine weitere Leitung 17 angeschlossen ist.

Diese Leitung 17 führt zu einer Stromschiene 19, die Teil der Kontaktierungseinrichtung 3 ist. Die Leitung 17 wird in eine an der Stromschiene vorgesehene Klemmeinrichtung eingesteckt und sicher fixiert.

Die Stromschiene 19 selbst besteht aus einem elektrisch leitfähigen Material, beispielsweise Kupfer und weist eine längliche Form vergleichbar mit einem Streifen auf. Am innenliegenden Ende der Stromschiene 19 ist eine senkrecht zur Längsachse der Stromschiene verlaufende Klemme 21 vorgesehen. Am gegenüberliegenden Ende. der Stromschiene 19 ist eine weitere senkrecht zur Längsachse verlaufende Klemme 23 angeordnet, die als Aufnahme der von außen kommenden Anschlußleitung dient.

Aufgrund der Leitfähigkeit der Stromschiene 19 ist somit eine elektrische Verbindung zwischen der äußeren Klemme 23, die ebenfalls leitfähig ist, über die leitfähige Klemme 21, die Leitung 17, die Klemme 15 und die Leitung 13 mit der Bürste 9 hergestellt.

Die Stromschiene 19 ist in einer Halterung 25 geführt, die die Bewegungsrichtung der Schiene auf deren Längsrichtung begrenzt. Dazu liegen zumindest Bereiche aller Längsseiten in der Stromschiene 19 an entsprechenden Begrenzungsflächen der Halterung 25 an. Damit läßt sich die Stromschiene lediglich in ihrer Längsrichtung verschieben

Die Halterung 25 ist im Gehäuseinneren so angeordnet, daß ihre Längsachse parallel zum Radius der kreisförmigen Gehäusewand verläuft. Auf der -bezüglich der Zeichenebene- oberen Seite der Halterung 25 sind Stege 27 vorgesehen, die die Bewegung der Stromschiene nach oben begrenzen. In der Figur 1 ist deutlich zu erkennen, daß die Stege 27 sich nicht vollständig über die Breite der Stromschiene 19 erstrecken sondern bereits im Randbereich der Stromschiene enden. Somit wird von zwei gegenüberliegenden Stegen 27 ein Spalt 29 gebildet. Die Breite dieses Spaltes 29. entspricht dabei mindestens der Breite der innenliegenden Klemme 21, so daß diese bei einer Verlagerung der Stromschiene 19 zwischen den Stegen hindurch bewegbar ist.

Im Bereich der Kontaktierungseinrichtung 3 ist in der Gehäusewandung eine Öffnung 31 vorgesehen, deren Abmessung so gewählt ist, daß die beiden Stromschienen 19 durch die öffnung nach außen verlagerbar sind.

Figur 1b zeigt den Elektromotor 1 gemäß Figur 1a mit herausgezogenen Stromschienen 19. Sie sind um eine Strecke verlagert, die in etwa ihrer Länge entspricht, wobei die innere Klemme 21 an einem Anschlag anschlägt, der im äußeren Endbereich der Halterung 25 vorgesehen ist. Der Anschlag gewährleistet, daß die Stromschiene 19 nicht vollständig aus dem Gehäuse herausziehbar ist.

In dem ausgezogenen Zustand der Stromschienen 19 lassen sich Anschlußleitungen 33 auf einfache Art und Weise an den Klemmen 23 befestigen, beispielsweise durch Löten oder Schweißen oder einfach durch Festklemmen. Die Anschlußleitungen 33 selbst werden von einem Kontaktierungsflansch 35 gehalten. Dieser weist für jede Anschlußleitung 33 einen Kanal 37 auf, in dem eine Abdichtung 39 vorgesehen ist. Diese sorgt dafür, daß keine Flüssigkeit an der Anschlußleitung 33 vorbei durch diesen Kanal hindurchtreten kann. Es handelt sich hierbei vorzugsweise um sogenannte Einzeladerabdichtungen.

Im gezeigten Schnitt ist deutlich zu erkennen, daß der Kontaktierungsflansch 35 eine der kreisförmigen Wandung des Motorgehäuses 5 angepaßte Form aufweist. Im Bereich der Kanäle 37 weist der Kontaktierungsflansch 35 einen Kontaktierungsfortsatz 41 auf, der bezüglich der benachbarten Fläche hervorragt. Die Größe dieses Kontaktierungsfortsatzes 41 entspricht der Größe der Öffnung 31, so daß er die Öffnung vollständig ausfüllt.

Dies ist in Figur 1c dargestellt. In diesem letzten Verfahrensschritt wird der Kontaktierungsflansch 35 radial zum Kommutator 7 nach innen gedrückt, so lange bis die dem Motorgehäuse zugewandte Fläche des Kontaktierungsflanschs 35 an der Wandung des Motorgehäuses 5 anliegt. Deutlich zu erkennen ist, daß der Kontaktierungsfortsatz 41 des Kontaktierungsflanschs 35 die Öffnung 31 ausfüllt. Die radiale Erstreckung des Kontaktierungsfortsatzes 41 ist dabei etwas größer gewählt als die Dicke der Motorgehäusewandung, so daß die Klemmen 23 der Stromschiene 19 im Inneren des Gehäuses liegen. Zur Befestigung des Kontaktierungsflanschs 35 sind Schrauben 43 vorgesehen, die entsprechend im Kontaktierungsflansch 35 und in der Wandung des Motorgehäuses 5 vorgesehene Bohrungen durchgreifen. Zur Abdichtung dieser Bohrungen sind den Schrauben 43 übliche Dichtungen 45 zugeordnet.

Um ein Eindringen von Flüssigkeit durch die Öffnung 31 zu verhindern, weist der Kontaktierungsflansch 35 eine Dichtung 47 auf, die den Kontaktierungsfortsatz 41 und damit im festgeschraubten Zustand auch die öffnung 31 umgibt.

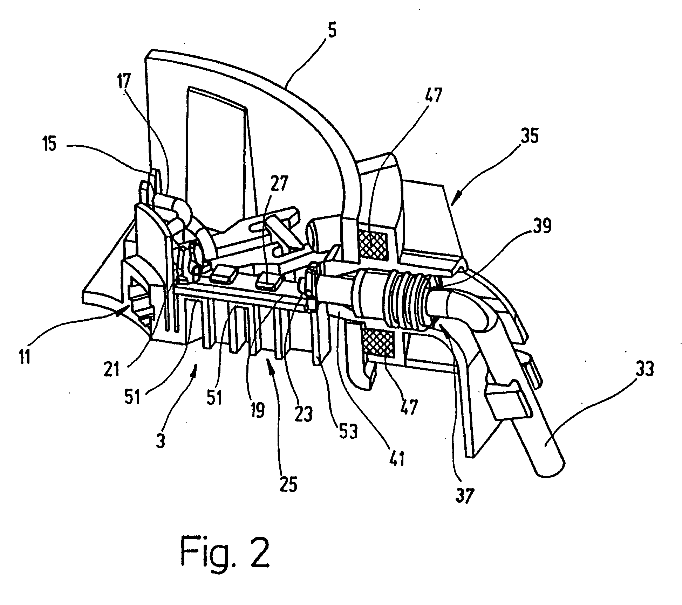

In Figur 2 ist die Kontaktierungseinrichtung 3 und der Kontaktierungsflansch 35 in perspektivischer Schnittdarstellung zu sehen. Deutlich zu erkennen sind die Klemmen 21 und 23, die an der Stromschiene 19 angebracht sind, so wie die Klemme 15, an der die Leitung 17 befestigt ist.

Die Stromschiene 19 liegt auf Trägern 51 auf, die zwischen senkrecht zur Längsrichtung der Stromschiene verlaufenden Rippen ausgebildet sind. Den Trägern 51 gegenüber sind die Stege 27 angeordnet, die die Begrenzung nach oben bewirken.

In Figur 2 ist nicht zu erkennen, daß an der den Trägern 51 zugewandten Fläche der Stromschiene 19 im Bereich der äußeren Rippe 53 eine Erhebung vorgesehen ist, die beim Herausziehen der Stromschiene 19 zunächst über die obere Kante der Rippe 53 gleiten muß. Hierzu ist eine größe Kraft notwendig, so daß ein unbeabsichtigtes Herausgleiten der Stromschiene 19 verhindert werden kann. Selbstverständlich läßt sich die Erhebung auch an der Klemme 23 oder der Klemme 21 anbringen.

In Figur 2 ist deutlich zu erkennen, daß die Halterung 25 Bestandteil der Bürstenhalterung 11 ist.

Wie bereits erwähnt, liegt die dem Gehäuse 5 zugewandte Fläche des Kontaktierungsflanschs 35 dicht an der Gehäusewandung an, wobei die öffnung 31 von der Dichtung 47 umschlossen wird. Darüber hinaus ragt der Kontaktierungsfortsatz 41 des Kontaktierungsflanschs 35 durch die öffnung 31 in das Gehäuseinnere, wobei die Umfangsfläche des Kontaktierungsfortsatzes 41 an der Innenfläche der öffnung 31 anliegt.

Der in das Gehäuseinnere verlaufende Kanal 37 des Kontaktierungsflanschs 35 ist sehr gut durch die mehrstufige Kanalabdichtung 39 gegen das Eindringen von Flüssigkeit abgedichtet.

## Patentansprüche

1. Elektromotor mit einem Motorgehäuse (5) und einer Kontaktierungseinrichtung (3) zur Zuleitung elektrischer Energie von außen an entsprechende Motorteile (9.1; 9.2), **dadurch gekennzeichnet, dass** die Kontaktierungseinrichtung (3) mindestens eine im Gehäuseinneren angeordnete Stromschiene (19) umfasst, die in einer Halterung (25) geführt ist und die durch eine Öffnung (31) in einer Gehäusewandung hindurch entlang dieser Halterung (25) in ihrer Längsrichtung verschiebbar ist und deren äußeres Ende mit einer Anschlussleitung (33) elektrisch verbunden und deren inneres Ende mit entsprechende Motorteilen (9) elektrisch verbindbar ist.

2. Elektromotor nach Anspruch 1, **dadurch gekennzeichnet, dass** für jede Anschlussleitung (33) eine Stromschiene (19) vorgesehen ist.

3. Elektromotor nach Anspruch 1 oder 2 , **dadurch gekennzeichnet, dass** die Stromschiene (19) parallel zum Radius eines topfförmigen Motorgehäuses (5) verlagerbar ist.

4. Elektromotor nach einem der vorhergehenden Ansprüche, **dadurch gekennzeichnet, daß** daß die Stromschiene (19) in einer im Gehäuseinneren angeordneten Halterung (25) geführt ist.

5. Elektromotor nach einem der vorhergehenden Ansprüche, **dadurch gekennzeichnet, daß** ein innenliegendes Ende der Stromschiene (19) eine Klemme aufweist, in die eine elektrische Leitung einklemmbar, bzw. schweiß-/lötbar ist, so daß eine elektrische Verbindung hergestellt wird.

6. Elektromotor nach Anspruch 5, **dadurch gekennzeichnet, daß** die Klemme (21) senkrecht zur Verlagerungsrichtung der Stromschiene angeordnet ist.

7. Elektromotor nach einem der vorhergehenden Ansprüche, **dadurch gekennzeichnet, daß** ein außenliegendes Ende der Stromschiene (19) einen senkrecht zur Verlagerungsrichtung verlaufenden Anschlußabschnitt aufweist.

8. Elektromotor nach einem der vorhergehenden Ansprüche, **dadurch gekennzeichnet, daß** an der der Halterung (25) zugewandten Fläche der Stromschiene (19) eine Erhebung vorgesehen ist, die mit einer entsprechenden Ausformung an der Halterung als wiederlösbarer Schnappverschluß wirkt.

9. Elektromotor nach einem der vorhergehenden Ansprüche, **dadurch gekennzeichnet, daß** die Halterung (25) einen als Gleitbett ausgebildeten Bereich aufweist, in dem die Stromschiene liegt, und daß zumindest ein Steg (27) an der Halterung (25) vorgesehen ist, der die Stromschiene (19) zumindest teilweise übergreift, so daß diese senkrecht zur Verlagerungsrichtung im Gleitbett festgelegt ist.

10. Elektromotor nach einem der vorhergehenden Ansprüche, **dadurch gekennzeichnet, daß** ein Kontaktierungsflansch (35) vorgesehen ist, der mit dem Anschlußabschnitt der Stromschiene (19) verbindbar ist und derart ausgebildet ist, daß er an der Außenwandfläche des Motorgehäuses (5) dicht anliegt und die Öffnung (31) abdichtet.

11. Elektromotor nach einem. der vorhergehenden Ansprüche, **dadurch gekennzeichnet, daß** der Kontaktierungsflansch (35) eine Kabeldichtung (39) aufweist, die der mit der Stromschiene verbundenen Anschlußleitung (33) zugeordnet ist und einen Leitungskanal (37) zum Gehäuseinneren hin abdichtet.

## Claims

1. Electric motor having a motor housing (5) and a contact-making device (3) for supplying electrical power to corresponding parts (9.1; 9.2) of the motor from the outside, **characterized in that** the contact-making device (3) comprises at least one busbar (19) which is arranged in the interior of the housing, is guided in a holder (25), can be moved through an opening (31) in a housing wall along this holder (25) in the longitudinal direction thereof, and whose outer end is electrically connected to a connection line (33) and whose inner end can be electrically connected to corresponding parts (9) of the motor.

2. Electric motor according to Claim 1, **characterized in that** one busbar (19) is provided for each connection line (33).

3. Electric motor according to Claim 1 or 2, **characterized in that** the busbar (19) can be moved parallel to the radius of a pot-like motor housing (5).

4. Electric motor according to one of the preceding claims, **characterized in that** the busbar (19) is guided in a holder (25) which is arranged in the interior of the housing.

5. Electric motor according to one of the preceding claims, **characterized in that** an inner end of the busbar (19) has a terminal into which an electrical line can be clamped and/or can be welded/soldered such that an electrical connection is produced.

6. Electric motor according to Claim 5, **characterized in that** the terminal (21) is arranged perpendicular to the direction of movement of the busbar.

7. Electric motor according to one of the preceding claims, **characterized in that** an outer end of the busbar (19) has a connection section which runs perpendicular to the direction of movement.

8. Electric motor according to one of the preceding claims, **characterized in that** a projection is provided on that surface of the busbar (19) which faces the holder (25), the projection interacting with a corresponding recess in the holder as a releasable snap-action closure.

9. Electric motor according to one of the preceding claims, **characterized in that** the holder (25) has a region which is in the form of a sliding bed and in which the busbar is situated, and **in that** at least one web (27) is provided on the holder (25) and extends at least partially over the busbar (19) such that the latter is fixed in the sliding bed, perpendicular to the direction of movement.

10. Electric motor according to one of the preceding claims, **characterized in that** a contact-making flange (35) is provided which can be connected to the connection section of the busbar (19) and is formed in such a way that it rests against the surface of the outer wall of the motor housing (5), forming a seal, and seals off the opening (31).

11. Electric motor according to one of the preceding claims, **characterized in that** the contact-making flange (35) has a cable seal (39) which is associated with the connection line (33) connected to the busbar and seals a duct (37) from the interior of the housing.

## Revendications

1. Moteur électrique comportant un boîtier de moteur (5) et une installation de contact (3) pour fournir l'énergie électrique extérieure à des parties de moteur (9.1 ; 9.2) correspondantes,
**caractérisé en ce que**
l'installation de contact (3) comporte au moins un rail électrique (19) installé à l'intérieur du boîtier guidé dans un support (25) et coulissant à travers une ouverture (31) dans une paroi du boîtier, le long de ce support (25) suivant sa direction longitudinale et dont l'extrémité extérieure est reliée électriquement à une ligne de branchement (33) et dont l'extrémité intérieure est reliée électriquement aux parties correspondantes (9) du moteur.

2. Moteur électrique selon la revendication 1,
**caractérisé par**
un rail électrique (19) pour chaque ligne de branchement (33).

3. Moteur électrique selon la revendication 1 ou 2,
**caractérisé en ce que**
le rail électrique (19) est mobile parallèlement au rayon d'un boîtier de moteur (5) en forme de pot.

4. Moteur électrique selon l'une des revendications précédentes,
**caractérisé en ce que**
le rail électrique (19) est guidé dans un support (25) installé à l'intérieur du boîtier.

5. Moteur électrique selon l'une des revendications précédentes,
**caractérisé en ce que**
l'extrémité intérieure du rail électrique (19) comporte une borne dans laquelle on peut pincer ou souder/braser une ligne électrique pour réaliser la connexion électrique.

6. Moteur électrique selon la revendication 5,
**caractérisé en ce que**
la borne (21) est perpendiculaire à la direction de déplacement du rail électrique.

7. Moteur électrique selon l'une des revendications précédentes,
**caractérisé en ce que**
l'extrémité extérieure du rail électrique (19) comporte un segment de raccordement perpendiculaire à la direction de déplacement.

8. Moteur électrique selon l'une des revendications précédentes,
**caractérisé en ce que**
la surface du rail électrique (19) tournée vers le support (25) comporte un bossage coopérant avec une déformation correspondante du support comme par exemple une liaison par enclipsage, détachable.

9. Moteur électrique selon l'une des revendications précédentes,
**caractérisé en ce que**
le support (25) comporte une zone en forme de surface de glissement recevant le rail électrique et au moins une entretoise (27) est prévue sur le support (25) qui chevauche au moins partiellement le rail électrique (19) pour que celui-ci soit fixé dans la surface de guidage perpendiculairement à la direction de déplacement.

10. Moteur électrique selon l'une quelconque des revendications précédentes,
**caractérisé par**
une bride de contact (35) susceptible d'être reliée au segment de raccordement du rail électrique (19) et cette bride est réalisée pour s'appliquer de manière étanche contre la surface de paroi extérieure du boîtier de moteur (5) et fermer l'ouverture (31) de manière étanche.

11. Moteur électrique selon l'une quelconque des revendications précédentes,
**caractérisé en ce que**
la bride de contact (35) comporte un joint de câble (39) associé à la ligne de branchement (33) reliée au rail électrique et assurant l'étanchéité du canal de passage de ligne (37) vers l'intérieur du boîtier.
